(19) Europäisches Patentamt
European Patent Office
Office européen des brevets

(11) **EP 3 713 320 A1**

(12) **EUROPEAN PATENT APPLICATION**
published in accordance with Art. 153(4) EPC

(43) Date of publication:
**23.09.2020  Bulletin 2020/39**

(21) Application number: **17931837.3**

(22) Date of filing: **17.11.2017**

(51) Int Cl.:
**H04W 72/04** (2009.01)    **H04W 72/12** (2009.01)

(86) International application number:
**PCT/JP2017/041571**

(87) International publication number:
**WO 2019/097702 (23.05.2019 Gazette 2019/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **NTT DOCOMO, INC.**
**Chiyoda-ku**
**Tokyo 100-6150 (JP)**

(72) Inventors:
• **YOSHIOKA, Shohei**
  **Tokyo 100-6150 (JP)**
• **TAKEDA, Kazuki**
  **Tokyo 100-6150 (JP)**
• **NAGATA, Satoshi**
  **Tokyo 100-6150 (JP)**
• **WANG, Lihui**
  **Beijing 100190 (CN)**

(74) Representative: **Hoffmann Eitle**
**Patent- und Rechtsanwälte PartmbB**
**Arabellastraße 30**
**81925 München (DE)**

(54) **USER TERMINAL AND WIRELESS COMMUNICATION METHOD**

(57)    A user terminal according to the present invention includes a transmitting section that transmits uplink data and uplink control information by using an uplink shared channel, and a control section that controls mapping of the uplink control information, based on information related to resource block groups (RBGs) allocated to the uplink shared channel and/or information related to control bands used as control units for precoding of the uplink shared channel.

FIG. 5

EP 3 713 320 A1

**Description**

Technical Field

The present invention relates to a user terminal and a radio communication method in next-generation mobile communication systems.

Background Art

In the UMTS (Universal Mobile Telecommunications System) network, the specifications of Long-Term Evolution (LTE) have been drafted for the purpose of further increasing high speed data rates, providing lower latency, and so on (see non-patent literature 1). Successor systems of LTE are also under study for the purpose of achieving further broadbandization and increased speed beyond LTE (referred to as, for example, "LTE-A (LTE-Advanced)," "FRA (Future Radio Access)," "4G," "5G," "5G+ (plus)," "NR (New RAT)," "LTE Rel. 14," "LTE Rel. 15 (or later versions)," and so on).

In existing LTE systems (for example, LTE Rel. 8 to Rel. 13), an uplink (UL) supports a DFT-spread-OFDM (DFT-s-OFDM (Discrete Fourier Transform-Spread-Orthogonal Frequency Division Multiplexing)) waveform. The DFT-s-OFDM waveform is a single carrier waveform and can thus prevent an increase in a peak to average power ratio (PAPR).

Furthermore, in existing LTE systems (for example, LTE Rel. 8 to Rel. 13), a user terminal transmits uplink control information (UCI) by using an uplink data channel (for example, PUSCH (Physical Uplink Shared Channel)) and/or an uplink control channel (for example, PUCCH (Physical Uplink Control Channel)).

Transmission of the UCI is controlled, based on the presence (or absence) of configuration of simultaneous PUSCH and PUCCH transmission and the presence (or absence) of scheduling of the PUSCH in TTI for transmission of the UCI. Transmission of the UCI by using of the PUSCH is referred to as UCI on PUSCH.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

In existing LTE systems (for example, LTE Rel. 8 to Rel. 13), in a case where transmission of uplink data (for example, UL-SCH) overlaps a transmission timing for uplink control information (UCI), the uplink data and the UCI are transmitted by using the uplink shared channel (PUSCH) (UCI on PUSCH).

However, in future radio communication systems (for example, LTE Rel. 14 and later versions, 5G, NR, or the like), in a case where the uplink data and the UCI are transmitted by using the PUSCH as is the case with the existing LTE systems described above, degradation of properties of the uplink data may progress in keeping with an increase in the number of pieces of UCI multiplexed in the uplink data. In a case where the UCI is allocated concentratively to specific frequency resources, a frequency diversity effect fails to be produced, and the properties of the UCI may be degraded.

The present invention has been made in view of the above, and an object of the present invention is to provide a user terminal and a radio communication method in which, in a case where uplink data and uplink control information are transmitted by using an uplink shared channel, degradation of properties of the uplink data and/or UCI can be prevented.

Solution to Problem

An aspect of a user terminal according to the present invention includes a transmitting section that transmits uplink data and uplink control information by using an uplink shared channel, and a control section that controls mapping of the uplink control information, based on information related to resource block groups (RBG) allocated to the uplink shared channel and/or information related to control bands used as control units for precoding of the uplink shared channel.

Advantageous Effects of Invention

According to the present invention, in a case where uplink data and uplink control information are transmitted by using the uplink shared channel, degradation of properties of the uplink data and/or UCI can be prevented.

Brief Description of Drawings

FIGS. 1A and 1B are diagrams to show examples of mapping of DMRS on a PUSCH;
FIG. 2 is a diagram to show a case of employing rate matching processing and puncture processing as a UCI mapping method;
FIGS. 3A and 3B are diagrams to show an example of UCI multiplexing positions (puncture positions) in a case where frequency-first mapping is employed for uplink data;
FIGS. 4A and 4B are diagrams to show an example of an RA type for a PUSCH;
FIG. 5 is a diagram to show an example of UCI mapping according to a first aspect;
FIG. 6 is a diagram to show an example of UCI mapping according to a second aspect;
FIG. 7 is a diagram to show an example of a schematic structure of a radio communication system according to the present embodiment;
FIG. 8 is a diagram to show an example of an overall structure of a radio base station according to the present embodiment;
FIG. 9 is a diagram to show an example of a functional structure of the radio base station according to the present embodiment;
FIG. 10 is a diagram to show an example of an overall structure of a user terminal according to the present embodiment;
FIG. 11 is a diagram to show an example of a functional structure of the user terminal according to the present embodiment; and
FIG. 12 is a diagram to show an example of a hardware structure of a radio base station and a user terminal according to the present embodiment.

Description of Embodiments

In UL transmission in existing LTE systems, a method is supported in which, in a case where UCI transmission and uplink data (UL-SCH) transmission take place at the same timing, the UCI and the uplink data are multiplexed on a PUSCH and then transmitted (also referred to as UCI piggyback on PUSCH and UCI on PUSCH). The use of UCI on PUSCH allows a low PAPR (Peak-to-Average Power Patio) and/or a low inter-modulation distortion (IMD) to be achieved in the UL transmission.

Also for the UL transmission in future radio communication systems (for example, LTE Rel. 14 and later versions, 5G, NR, or the like), support of UCI on PUSCH has been under study.

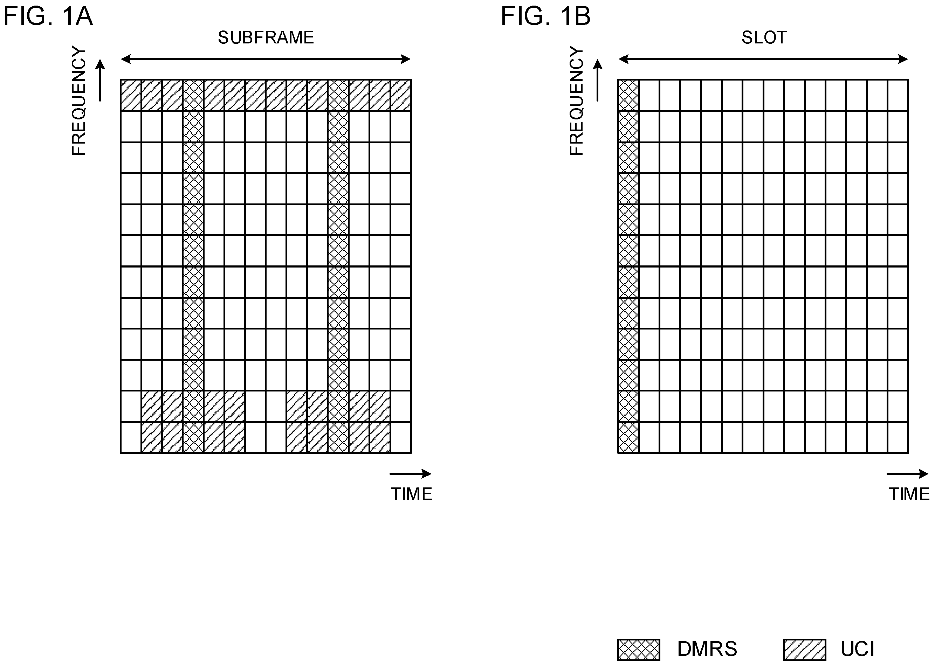

In the existing LTE systems, a demodulation reference signal for the PUSCH (also referred to as DMRS (Demodulation Reference Signal)) is mapped to two symbols in a subframe (for example, a fourth symbol and an eleventh symbol) (see FIG. 1A). On the other hand, for the future radio communication systems, there is an agreement that, in the UL transmission, the DMRS for the PUSCH is mapped to a leading position of a subframe (or a slot) (see FIG. 1B). Thus, in the future radio communication systems, a PUSCH configuration different from that in the existing LTE systems is employed, and thus UCI on PUSCH suitable for the PUSCH configuration is desired.

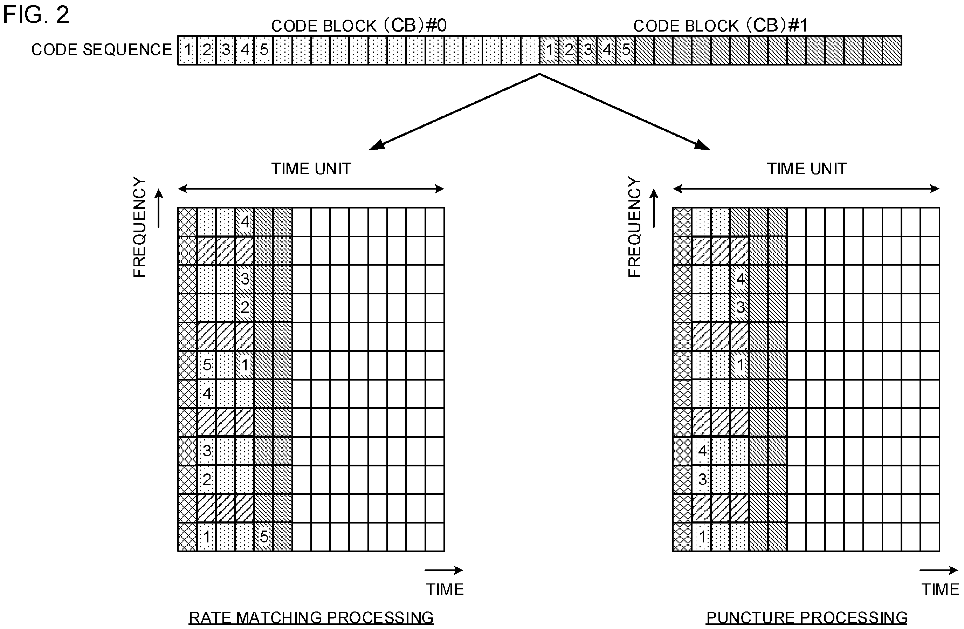

As a multiplexing method for uplink control information (UCI) on the PUSCH, rate matching processing and/or puncture processing may be employed. FIG. 2 shows a case where UCI is multiplexed by employing rate matching processing or puncture processing for uplink data transmitted in a plurality of code blocks (here, CB #0 and CB #1).

FIG. 2 shows a UCI multiplexing method by which uplink data is transmitted on the PUSCH in units of code blocks (CBs). The CBs are units configured by dividing a transport block (TB).

In the existing LTE systems, when a transport block size (TBS) is larger than a certain threshold (for example, 6144 bits), the TB is divided into one or more segments (code blocks (CBs)) and coding is performed in units of the segments (code block segmentation). Coded code blocks are connected and then transmitted. The TBS is the size of a transport block corresponding to a unit of an information bit sequence. One or more TBs are allocated to one subframe.

The rate matching processing refers to controlling the number of bits resulting from coding (coded bits) in consideration of actually available radio resources. In other words, a coding rate for the uplink data is varied and controlled depending on the number of pieces of UCI multiplexed (see FIG. 2). Specifically, as shown in FIG. 2, control is performed to avoid allocating a sequence (1 to 5) in each CB to UCI multiplexing positions. This allows multiplexing without corrupting the code sequences in the uplink data. However, data is prevented from being correctly obtained unless UCI multiplexing positions can be shared between a radio base station and a user terminal.

The puncture processing refers to performing coding on the assumption that resources allocated for data are available, but avoiding mapping of coding symbols to actually unavailable resources (for example, UCI resources) (clearing resources). In other words, a mapped code sequence in uplink data is overwritten with UCI (see FIG. 2). Specifically, as shown in FIG. 2, a CB sequence (1 to 5) is allocated to any positions regardless of whether the positions are intended for UCI multiplexing, and elements (2 and 5) of the sequence in which UCI is multiplexed is overwritten with the UCI. This prevents the positions of other elements of the core sequences from being corrupted, and thus, data is likely to be correctly obtained even in a case where discrepancy in UCI multiplexing occurs between the radio base station and the user terminal.

In a case where the rate matching processing and/or the puncture processing is performed on UCI on PUSCH, a coding rate for the uplink data increases consistently with the number of pieces of UCI multiplexed in a certain resource unit, and the properties may be degraded. Here, the resource units are also referred to as, for example, a certain number of physical resource blocks (PRBs, or simply resource blocks (RBs)).

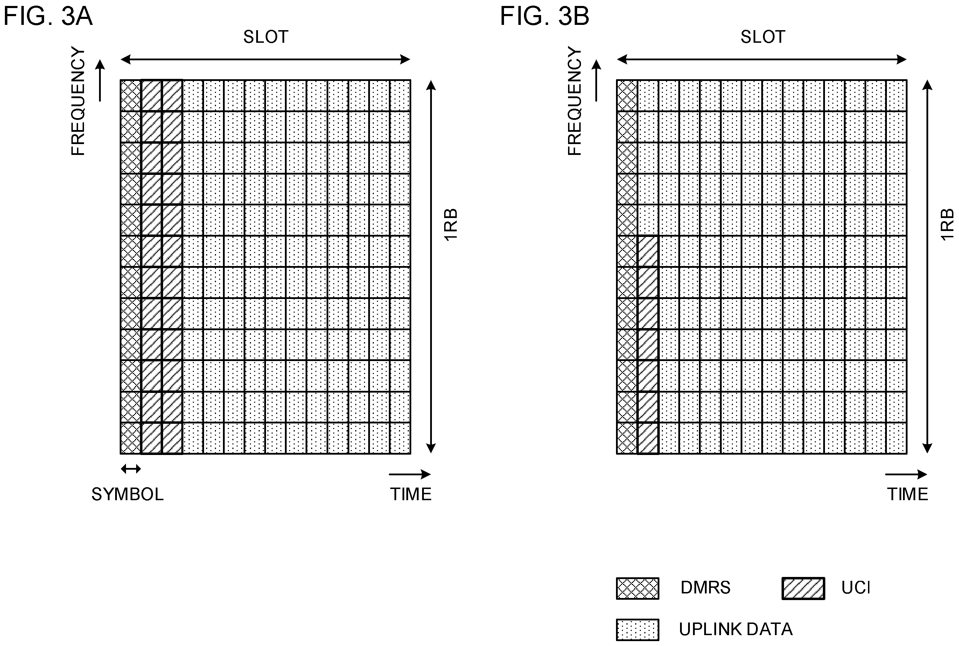

FIG. 3 is a diagram to show an example of UCI multiplexing in a certain resource unit. FIGS. 3A and 3B illustrate a PRB as a resource unit in a frequency direction (frequency resource unit). However, no such limitation is intended. FIGS. 3A and 3B illustrate a slot as a resource unit in a time direction (time resource unit). However, no such limitation is intended.

In FIG. 3A, the UCI is mapped to 24 resource elements (REs) in two symbols succeeding the first symbol for the DMRS (DMRS symbol) in the slot. On the other hand, in FIG. 3B, the UCI is mapped to seven REs in one symbol succeeding the DMRS symbol.

In FIG. 3A, the rate matching processing and/or puncture processing is applied to more REs than in FIG. 3B, so that this increases the coding rate of the uplink data allocated to the PRBs and may degrade the properties of the uplink data.

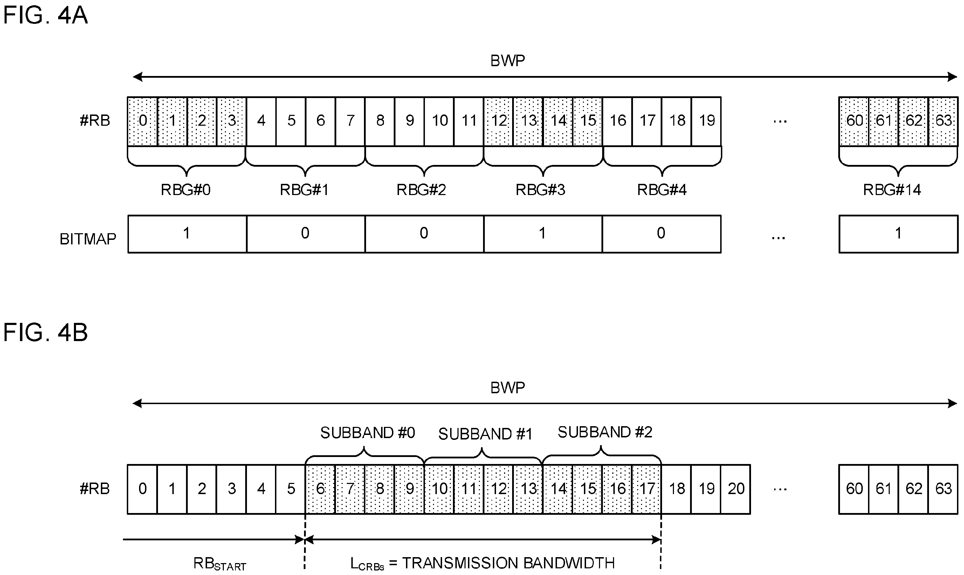

Incidentally, for the above-described future radio communication systems, support of one or more schemes (types) for PUSCH resource allocation (RA) has been under study. FIGS. 4A and 4B are diagrams to show an example of an RA type for the PUSCH. FIGS. 4A and 4B assume that a frequency band including a certain number of RBs is configured for the user terminal.

The frequency band may also be referred to as a "carrier (component carrier (CC) or a system band)," or a "partial frequency band in the carrier (partial band)" or a "bandwidth part (BWP)"), and so on.

FIG. 4A shows a first type of RA using a bitmap (also referred to as RA type 0, DL RA type 0, or the like). In the first type of RA, a bitmap for each resource block group (RBG) including one or more RBs indicates allocated resources for the PUSCH.

Note that the number of RBs (RBG size) included in the RBG may be determined, based on the number of RBs in the frequency band (for example, the BWP) configured for the user terminal and/or the size of the bitmap (the number of bits).

As shown in FIG. 4A, the first type of RA enables inconsecutive frequency resources to be allocated to the PUSCH. For example, in FIG. 4A, inconsecutive RBGs RBG #0, RBG #3, ..., RBG #14 are allocated to the PUSCH. The user terminal may determine RBG #0, RBG #3, ..., RBG #14 allocated to the PUSCH, based on a bitmap included in downlink control information (DCI, which is also referred to as a UL grant or the like).

FIG. 4B shows a second type of RA using an allocation resource start position and a transmission bandwidth (also referred to as, for example, RA type 1, DL RA type 2, and/or UL RA type 0). In the second type of RA, allocated resources for the PUSCH are indicated, based on the RB start position (also referred to as a start resource block, $RB_{START}$, or the like) and the transmission bandwidth (also referred to as a transmission bandwidth, the length of an allocated resource block, $L_{CRBs}$ ($L_{CRBs} \geq 1$), or the like).

As shown in FIG. 4B, the second type of RA allocates consecutive frequency resources to the PUSCH. For example, in FIG. 4B, RB #6 is used as a start position, and consecutive twelve RBs #6 to #17 are allocated to the PUSCH. As described above, in FIG. 4B, resources may be allocated to the PUSCH in units of RBs rather than in units of RBGs.

The user terminal may determine RBs #6 to #17 allocated to the PUSCH, based on a resource identifier (RIV (Resource Indication Value)) included in the DCI. The RIV may be determined, based on at least one of a BWP size, the start position ($RB_{START}$), and the transmission bandwidth ($L_{CRBs}$).

For the above-described future radio communication systems, studies have been conducted on provision of one or more bands (control bands) used as control units for precoding in all the bands allocated to the PUSCH, with the PUSCH and/or a demodulation reference signal (DMRS) for the PUSCH controlled for each of the control bands.

Here, the control band used as the control unit for precoding includes one or more RBs. The control region may also be referred to as a subband, a precoding resource block group (PRG), and so on. The number of RBs included in the control band may also be referred to as a subband size, a PRG size, and so on. The control region is hereinafter mainly referred to as a subband.

The user terminal may use a precoding weight that varies with subband or that is common to the subbands to control precoding of the PUSCH and/or the DMRS on the PUSCH.

For example, in the first type of RA shown in FIG. 4A, the subband may be equal to the RBG. In this case, the number of RBs included in the subband (subband size) may be equal to the RBG size (in FIG. 4A, four RBs) or to the number of RBs in a plurality of RBGs (for example, in a case where the PUSCH is consecutively allocated to RBG #2 and RBG #3, eight RBs in RBG #2 and #3).

On the other hand, in the second type of RA shown in FIG. 4B, the subband may be determined, based on the transmission bandwidth ($L_{CRBs}$). For example, in FIG. 4B, the subband is a subset of the transmission bandwidth ($L_{CRBs}$), and the subband size is smaller than the number of RBs included in the transmission bandwidth. For example, in FIG. 4B, the subband size is four RBs. Note that the subband size may be equal to the number of RBs included in the transmission bandwidth.

As described above, the future radio communication systems (for example, LTE Rel. 14 or later versions, 5G, NR, or the like) are assumed to allocate resources to the PUSCH in units of RBGs and/or control precoding of the PUSCH for each subband.

However, in a case where resources are allocated to the PUSCH in units of RBGs (for example, FIG. 4A), when the UCI is mapped to only some of the plurality of RBGs allocated to the PUSCH, the properties of the uplink data mapped to the some of the RBGs may be degraded. Furthermore, in a case where the UCI is mapped to only some of the RBGs, a frequency diversity effect fails to be produced, and as a result, the properties of the UCI may be degraded.

In addition, in a case that precoding of the PUSCH is controlled for each subband (for example, FIG. 4B and the RBGs in FIG. 4A may instead be subbands), when the UCI is mapped to only some of the plurality of subbands allocated to the PUSCH, the properties of the uplink data mapped to the some of the subbands may be degraded. Furthermore, in a case where the UCI is mapped to only some of the subbands, the frequency diversity effect fails to be produced, and as a result, the properties of the UCI may be degraded.

Thus, the inventors of the present invention focused on that, even in a case where resources are allocated to the PUSCH in units of RBGs and/or precoding of the PUSCH is controlled for each subband, the UCI is distributively mapped to a plurality of RBGs and/or a plurality of subbands allocated to the PUSCH (specifically, the UCI is distributively multiplexed in the frequency direction) to allow prevention of degradation of properties of the uplink data and/or UCI in some of the RBGs or some of the subbands, and the inventors of the present invention came with the present invention.

Hereinafter, the present embodiment will be described in detail. Note that, in the present embodiment, the UCI may include at least one of a scheduling request (SR), transmission confirmation information (HARQ-ACK (Hybrid Automatic Repeat reQuest-Acknowledge, which is also referred to as ACK or NACK (Negative ACK), A/N, or the like) for a downlink data channel (for example, PDSCH (Physical Downlink Shared Channel), channel state information (CSI), beam index information (BI (Beam Index)), and a buffer status report (BSR).

(First Aspect)

In a first aspect, in a case of using the PUSCH (uplink shared channel) to transmit the uplink data and the UCI, the user terminal controls mapping of the UCI, based on information related to RBGs allocated to the PUSCH.

Specifically, the user terminal may control resource elements (RE) to which the UCI is mapped, in each of the RBGs allocated to the PUSCH, based on information related to the RBGs.

Here, information related to the RBGs may indicate at least one of the number of RBGs allocated to the PUSCH (the number of RBGs), an index indicating the start position of each of the RBGs allocated to the PUSCH (for example, the index of an RB in each RBG or the index of a subcarrier in each RBG), and the number of RBs included in each RBG (RBG size).

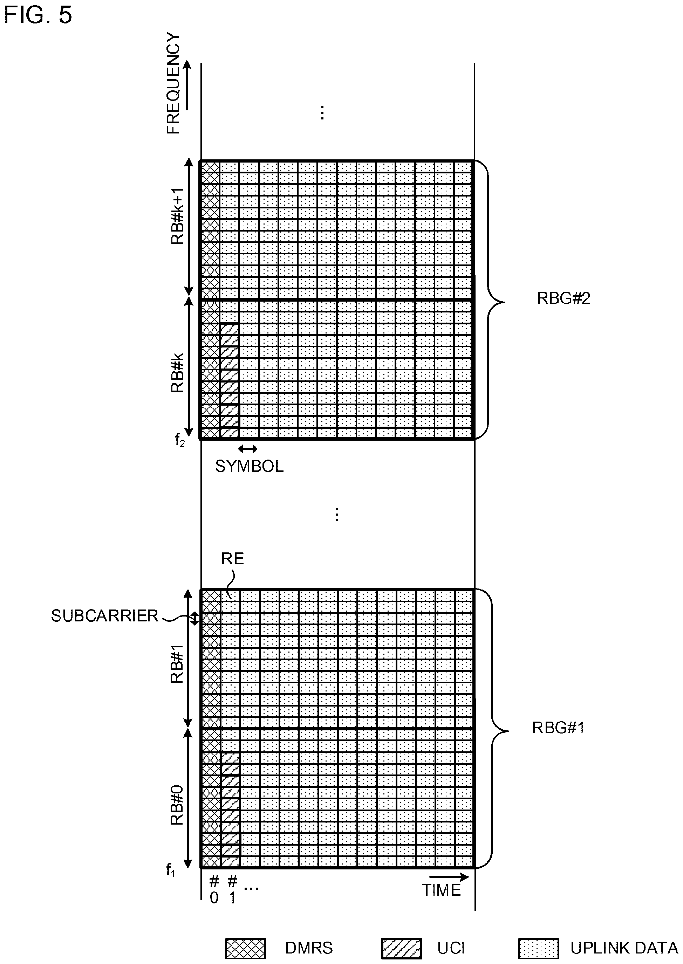

FIG. 5 is a diagram to show an example of mapping control of the UCI according to the first aspect. For example, in FIG. 5, a case in which two RBGs #1 and #2 are allocated to the PUSCH and in which the RBG size is equal to two RBs is shown as an example. Note that FIG. 5 is illustrative and that the total number of RBGs allocated to the PUSCH and/or the RBG size is not limited to the number and/or size illustrated in FIG. 5.

As shown in FIG. 5, in a case where a plurality of RBGs are allocated to the PUSCH, the user terminal may substantially evenly map (insert) the UCI to REs in each RBG. For example, in FIG. 5, the UCI is mapped to the same number of REs in each of RBG #1 and RBG #2. Note that the number of REs mapped with the UCI need not be the same in all of the plurality of RBGs or may vary at least in some RBGs.

The REs in each RBG to which the UCI is mapped may be determined, for example, based on a parameter indicating at least one of the following.

- the number $N_{RBG}$ of RBGs allocated to the PUSCH (for example, in FIG. 5, $N_{RSG} = 2$)
- an index $f_i$ indicating the start position of the i-th RBG of all the RBGs allocated to the PUSCH (for example, in FIG.

5, $f_1$ = RB #1 and $f_2$ = RB #2)
- the number $N_{RB}$ of RBs allocated to the PUSCH (for example, in FIG. 5, $N_{RB}$ = 4)
- the number $N_{SC}$ of subcarriers per RB (for example, in FIG. 5, $N_{SC}$ = 12)
- the index n of a symbol to which the UCI is mapped (UCI symbol) (for example, in FIG. 5, n = 1)
- the index $f_{UCI}(n)$ of a subcarrier to which the UCI is mapped in the n-th UCI symbol (for example, in FIG. 5, $f_{UCI}(n)$ = 0 to 9)
- the number $N_{UCI}$ of pieces of UCI,
- the RBG size
- the number of symbols in a slot
- the type of the UCI (for example, at least one of HARQ-ACK, CSI, and SR)
- the index $t_{UCI}(n)$ of a symbol to which the UCI is mapped in the n-th UCI symbol
- an index $t_0$ indicating the start position of UCI mapping in the time direction

The above-described parameters may be explicitly reported from the radio base station to the user terminal through higher layer signaling (for example, at least one of broadcast information, system information, and RRC signaling) and/or physical layer signaling (for example, DCI) or may be derived by the user terminal.
The user terminal can determine the REs in each RBG to which the UCI is mapped, for example, based on Formula 1 described below and/or Formula 2 described below using at least one of the above-described parameters.

(Formula 1)

$$f_{UCI}(n) = n \bmod \left( N_{SC} N_{RB} / N_{RBG} \right) + f_i$$

$$\begin{cases} i = \left\lfloor \dfrac{n}{N_{SC} N_{RB}} \right\rfloor & for \ \{ t_{UCI}(n) - t_0 \} N_{SC} N_{RB} \leq N_{UCI} \\[4mm] i = \left\lfloor \dfrac{n}{\left( N_{UCI} - \{ t_{UCI}(n) - t_0 \} N_{SC} N_{RB} \right) / N_{RBG}} \right\rfloor & for \ \{ t_{UCI}(n) - t_0 \} N_{SC} N_{RB} \geq N_{UCI} \end{cases}$$

(Formula 2)

$$t_{UCI}(n) = \left\lfloor \dfrac{n}{N_{SC} N_{RB}} \right\rfloor + t_0$$

Note that FIG. 5 shows the example in which the UCI is mapped to a single symbol but that the UCI may be mapped to a plurality of consecutive symbols and/or plurality of inconsecutive symbols. The one or more symbols to which the UCI is mapped may or may not be consecutive with the symbol to which the DMRS is mapped (DMRS symbol). The position and/or number of DMRS symbols is not limited to the position and/or number shown in FIG. 5.
Note that FIG. 5 shows the example in which the UCI is mapped to consecutive subcarriers but that the UCI may be mapped to inconsecutive subcarriers. For example, a group (REG) may be provided that includes one or more subcarriers (REs) that are consecutive in the frequency direction and/or the time direction, and one or more REGs to which the UCI is mapped may be distributively mapped into the RBG.
According to the first aspect, even in a case where resources are allocated to the PUSCH in units of RBGs, the UCI can be distributively mapped to a plurality of RBGs allocated to the PUSCH, so that the properties of the uplink data in some of the RBGs can be prevented from being degraded. Furthermore, the frequency diversity effect for the UCI can be produced, thus allowing the properties of the UCI to be prevented from being degraded.

(Second Aspect)

In a second aspect, in a case of using the PUSCH (uplink shared channel) to transmit the uplink data and the UCI, the user terminal controls mapping of the UCI, based on information related to subbands (control bands) allocated to the PUSCH.

Specifically, the user terminal may control REs to which the UCI is mapped, in each of the subbands allocated to the PUSCH, based on information related to the subbands.

Here, information related to the subbands (control bands) may indicate at least one of the number of subbands allocated to the PUSCH (the number of subbands), an index indicating the start position of each of the subbands allocated to the PUSCH (for example, the index of an RB in each subband or the index of a subcarrier in each subband), and the number of RBs included in each subband (subband size).

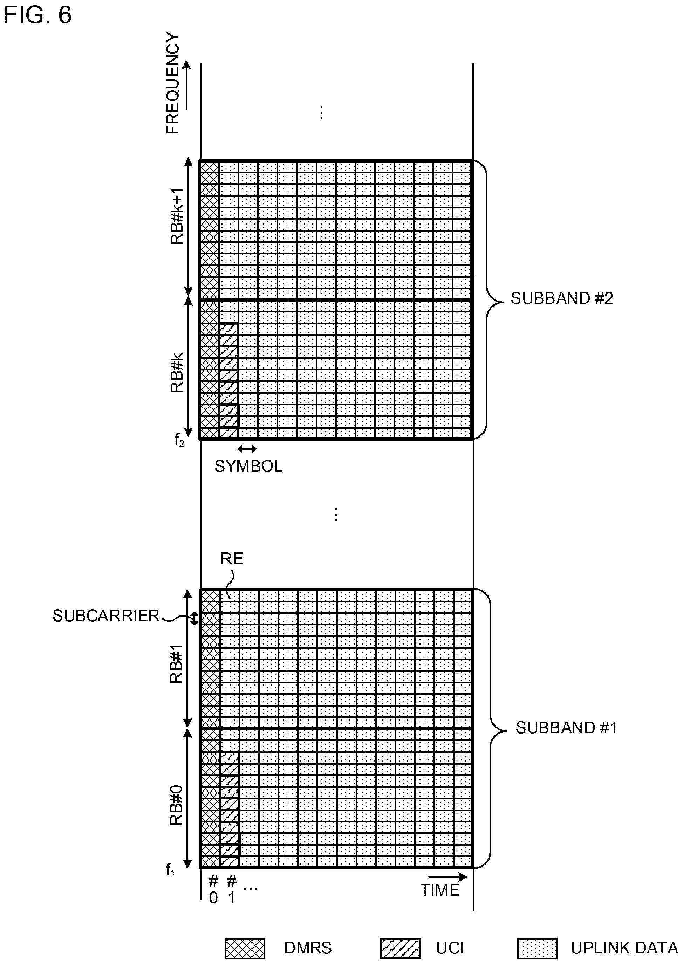

FIG. 6 is a diagram to show an example of mapping control of the UCI according to the second aspect. FIG. 6 will be described with differences from FIG. 5 focused on.

As shown in FIG. 6, in a case where a plurality of subbands are provided on the PUSCH, the user terminal may substantially evenly map (insert) the UCI to REs in each subband. For example, in FIG. 6, the UCI is mapped to the same number of REs in each of subbands #1 and #2. Note that the number of REs mapped with the UCI need not be the same in all of the plurality of subbands or may vary at least in some subbands.

The REs in each subband to which the UCI is mapped may be determined, for example, based on a parameter indicating at least one of the following.

- the number $N_{SB}$ of subbands allocated to the PUSCH (for example, in FIG. 5, $N_{SB}$ = 2)
- an index $f_i$ indicating the start position of the i-th subband of all the subbands allocated to the PUSCH (for example, in FIG. 5, $f_1$ = RB #1 and $f_2$ = RB #2)
- the number $N_{RB}$ of RBs allocated to the PUSCH (for example, in FIG. 5, $N_{RB}$ = 4)
- the number $N_{SC}$ of subcarriers per RB (for example, in FIG. 5, $N_{SC}$ = 12)
- the index n of a symbol to which the UCI is mapped (UCI symbol) (for example, in FIG. 5, n = 1)
- the index $f_{UCI}(n)$ of a subcarrier to which the UCI is mapped in the n-th UCI symbol (for example, in FIG. 5, $f_{UCI}(n)$ = 0 to 9)
- the number $N_{UCI}$ of pieces of UCI
- the subband size
- the number of symbols in a slot
- the type of the UCI (for example, at least one of HARQ-ACK, CSI, and SR)
- the index $t_{UCI}(n)$ of a symbol to which the UCI is mapped in the n-th UCI symbol.
- an index $t_0$ indicating the start position of UCI mapping in the time direction

The above-described parameters may be explicitly reported from the radio base station to the user terminal through the higher layer signaling (for example, at least one of broadcast information, system information, and RRC signaling) and/or the physical layer signaling (for example, DCI) or may be derived by the user terminal.

The user terminal can determine the REs in each subband to which the UCI is mapped, for example, based on Formula 3 described below and/or Formula 4 described below using at least one of the above-described parameters.

(Formula 3)

$$f_{UCI}(n) = n \bmod \left( N_{SC} N_{RB} / N_{SB} \right) + f_i$$

$$\begin{cases} i = \left\lfloor \dfrac{n}{N_{SC} N_{RB}} \right\rfloor & \text{for } \{t_{UCI}(n) - t_0\} N_{SC} N_{RB} \leq N_{UCI} \\[2em] i = \left\lfloor \dfrac{n}{\left( N_{UCI} - \{t_{UCI}(n) - t_0\} N_{SC} N_{RB} \right) / N_{SB}} \right\rfloor & \text{for } \{t_{UCI}(n) - t_0\} N_{SC} N_{RB} \geq N_{UCI} \end{cases}$$

(Formula 4)

$$t_{UCI}(n) = \left\lfloor \dfrac{n}{N_{SC} N_{RB}} \right\rfloor + t_0$$

Note that FIG. 6 shows the example in which the UCI is mapped to a single symbol but that the UCI may be mapped to a plurality of consecutive symbols and/or plurality of inconsecutive symbols. The one or more symbols to which the UCI is mapped may or may not be consecutive with the symbol to which the DMRS is mapped (DMRS symbol). The position and/or number of DMRS symbols is not limited to the position and/or number shown in FIG. 6.

Note that FIG. 6 shows the example in which the UCI is mapped to consecutive subcarriers but that the UCI may be mapped to inconsecutive subcarriers. For example, a group (REG) may be provided that includes one or more subcarriers (REs) that are consecutive in the frequency direction and/or the time direction, and one or more REGs to which the UCI is mapped may be distributively mapped into the subband.

According to the second aspect, even in a case where precoding of the PUSCH is controlled for each subband, the UCI can be distributively mapped to a plurality of subbands allocated to the PUSCH, so that the properties of the uplink data in some of the subbands can be prevented from being degraded. Furthermore, the frequency diversity effect for the UCI can be produced, thus allowing the properties of the UCI to be prevented from being degraded.

Note that the second aspect may be used independently or in combination with any other aspect. In a case where the second aspect is used in combination with the first aspect, the "subband" in the second aspect may include one or a plurality of RBGs.

(Other Aspects)

In the above-described first and second aspects, as a method for multiplexing the uplink data and the UCI, the puncture processing may be employed or the rate matching processing may be employed or both the puncture processing and the rate matching processing may be employed. Note that, in a case where the rate matching processing is employed, the present invention is effective for producing the frequency diversity effect on the UCI to allow the quality of the UCI to be improved.

In the above-described first and second aspects, the UCI is sequentially mapped, within each of the time units allocated to the PUSCH (for example, slots), to the DMRS starting with a symbol temporally close to the DMRS. However, no such limitation is intended. A certain offset may be provided to a position to which the n-th piece of UCI is mapped.

No limitation is imposed on the order in which the UCI is inserted into the uplink data (transport block (TB) or one or more code blocks (CBs)). The UCI may be inserted (or multiplexed), piece by piece, into a plurality of CBs (for example, three CBs #0 to #2) (for example, CBs #0->#1->#2->#0 ...), or may be multiplexed into a specific CB and then into the next CB (for example, CBs #0->#0->#0->#1 ...).

For the uplink data (TB or one or more CBs), frequency first mapping may be employed (see FIG. 3) and/or time first mapping may be employed. For the user terminal, interleave processing may be employed depending on the UCI multiplex position.

In the above-described first and second aspects, 14 and 7 symbols are illustrated as the duration of each of the time units (for example, slots or mini-slots) to which the PUSCH is allocated. However, no such limitation on the duration is intended. For example, the PUSCH may be allocated to the time units each with a duration of two or three symbols.

(Radio Communication System)

Hereinafter, a structure of a radio communication system according to the present embodiment will be described. In this radio communication system, the radio communication methods according to the above-described aspects are employed. Note that the radio communication methods according to the above-described aspects may be employed independently or may be employed by combining at least two of the radio communication methods.

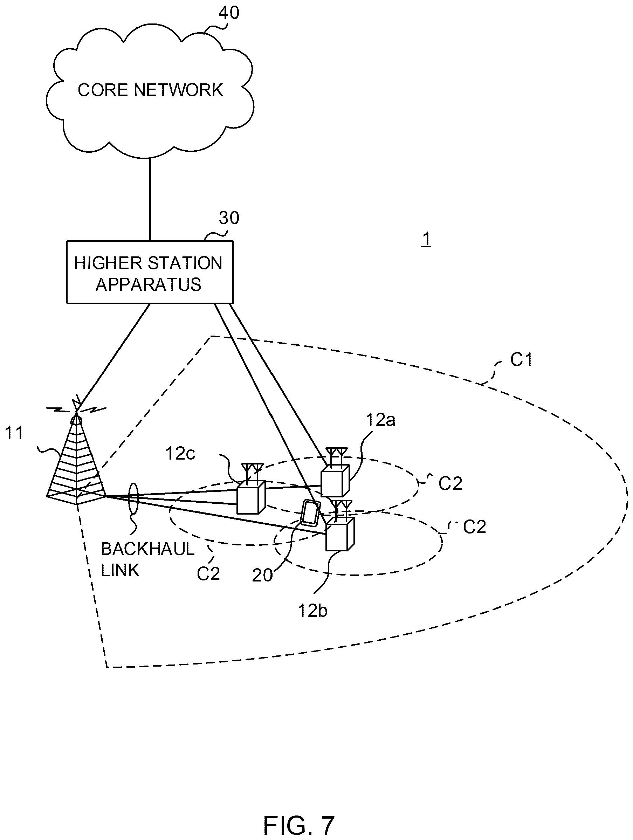

FIG. 7 is a diagram to show an example of a schematic structure of the radio communication system according to the present embodiment. A radio communication system 1 can adopt carrier aggregation (CA) and/or dual connectivity (DC) to group a plurality of fundamental frequency blocks (component carriers) into one, where the system bandwidth in LTE systems (for example, 20 MHz) constitutes one unit. Note that the radio communication system 1 may be also referred to as "SUPER 3G," "LTE-A (LTE-Advanced)," "IMT-Advanced," "4G," "5G," "FRA (Future Radio Access)," "NR (New RAT)," and so on.

The radio communication system 1 shown in FIG. 7 is provided with a radio base station 11 that forms a macro cell C1, and radio base stations 12a to 12c that form small cells C2, which are placed within the macro cell C1 and which are narrower than the macro cell C1. Also, user terminals 20 are placed in the macro cell C1 and in each small cell C2. A configuration may be used in which different numerologies are employed for respective cells. Note that the numerology refers to design of a signal in a certain RAT and/or a set of communication parameters characterizing the design of the RAT.

The user terminals 20 can connect with both the radio base station 11 and the radio base stations 12. The user terminals 20 may use the macro cell C1 and the small cells C2, which use different frequencies, at the same time by means of CA or DC. Also, the user terminals 20 can execute CA or DC by using a plurality of cells (CCs) (for example, two or more CCs). Furthermore, the user terminals can use licensed band CCs and unlicensed band CCs as a plurality of cells.

Furthermore, the user terminal 20 can perform communication using time division duplex (TDD) or frequency division duplex (FDD) in each cell. A TDD cell and an FDD cell may be referred to as a "TDD carrier (frame structure type 2)" and an "FDD carrier (frame structure type 1)," respectively, for example.

Each cell (carrier) may employ either subframes each having a relatively long duration (for example, 1 ms) (also referred to as TTI, normal TTI, long TTI, normal subframe, long subframe, slot, and so on) or subframes each having a relatively short duration (also referred to as short TTI, short subframe, slot, and so on) or may employ both long subframes and short subframes. Each cell may employ subframes with two or more durations.

Between the user terminals 20 and the radio base station 11, communication can be carried out using a carrier of a relatively low frequency band (for example, 2 GHz) and a narrow bandwidth (referred to as an "existing carrier," a "legacy carrier," and so on). Meanwhile, between the user terminals 20 and the radio base stations 12, a carrier of a relatively high frequency band (for example, 3.5 GHz, 5 GHz, 30 to 70 GHz, and so on) and a wide bandwidth may be used, or the same carrier as that used with the radio base station 11 may be used. Note that the structure of the frequency band for use in each radio base station is by no means limited to these.

A structure may be employed in which wired connection (for example, an optical fiber in compliance with the CPRI (Common Public Radio Interface), an X2 interface, and so on) or wireless connection is established between the radio base station 11 and the radio base stations 12 (or between two radio base stations 12) .

The radio base station 11 and the radio base stations 12 are each connected with a higher station apparatus 30, and are connected with a core network 40 via the higher station apparatus 30. Note that the higher station apparatus 30 may be, for example, access gateway apparatus, a radio network controller (RNC), a mobility management entity (MME), and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point," and so on. The radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points," and so on. Hereinafter, the radio base stations 11 and 12 will be collectively referred to as "radio base stations 10," unless specified otherwise.

The user terminals 20 are terminals to support various communication schemes such as LTE, LTE-A, and so on, and may include not only mobile communication terminals but also stationary communication terminals. Furthermore, the user terminals 20 can perform device-to-device (D2D) communication with other user terminals 20.

In the radio communication system 1, as radio access schemes, OFDMA (Orthogonal Frequency Division Multiple Access) can be applied to the downlink (DL), and SC-FDMA (Single-Carrier Frequency Division Multiple Access) can be applied to the uplink (UL). OFDMA is a multi-carrier communication scheme to perform communication by dividing a frequency band into a plurality of narrow frequency bands (subcarriers) and mapping data to each subcarrier. SC-FDMA is a single-carrier communication scheme to mitigate interference between terminals by dividing the system bandwidth into bands formed with one or consecutive resource blocks per terminal, and allowing a plurality of terminals to use mutually different bands. Note that the uplink and downlink radio access schemes are not limited to the combinations of these, and OFDMA may be used in UL. SC-FDMA can be employed for side links (SLs) used for inter-terminal communication.

In the radio communication system 1, a downlink data channel (PDSCH (Physical Downlink Shared Channel), which is also referred to as a "DL shared channel" and so on), which is shared by each user terminal 20, a broadcast channel (PBCH (Physical Broadcast Channel)), L1/L2 control channels, and so on, are used as DL channels. At least one of user data, higher layer control information, SIBs (System Information Blocks), and so on are communicated in the PDSCH. MIBs (Master Information Blocks) are communicated in the PBCH.

The L1/L2 control channels include DL control channels (for example, a PDCCH (Physical Downlink Control Channel) and/or an EPDCCH (Enhanced Physical Downlink Control Channel)), a PCFICH (Physical Control Format Indicator Channel), a PHICH (Physical Hybrid-ARQ Indicator Channel), and so on. For example, downlink control information (DCI) including PDSCH and PUSCH scheduling information is communicated in the PDCCH and/or EPDCCH. The number of OFDM symbols to use for the PDCCH is communicated in the PCFICH. The EPDCCH is frequency-division-multiplexed with the PDSCH and used to communicate DCI and so on, like the PDCCH. PUSCH transmission confirmation information (A/N or HARQ/ACK) can be communicated in at least one of the PHICH, the PDCCH, and the EPDCCH.

In the radio communication system 1, an uplink data channel (PUSCH (Physical Uplink Shared Channel, which is also referred to as a "UL shared channel" and so on)), which is shared by each user terminal 20, an uplink control channel (PUCCH (Physical Uplink Control Channel)), a random access channel (PRACH (Physical Random Access Channel)), and so on are used as UL channels. User data and higher layer control information are communicated in the PUSCH. Uplink control information (UCI) including at least one of PDSCH transmission confirmation information (A/N or HARQ-ACK), channel state information (CSI), and so on, is communicated in the PUSCH or the PUCCH. By means of the PRACH, random access preambles for establishing connections with cells can be communicated.

<Radio Base Station>

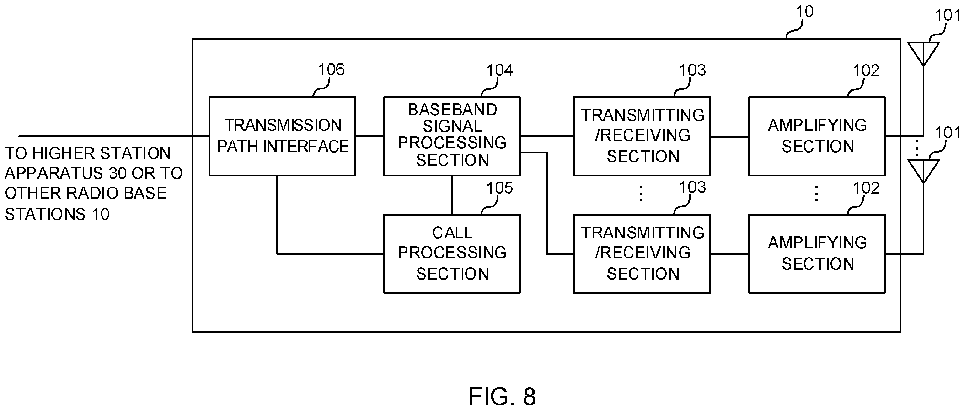

FIG. 8 is a diagram to show an example of an overall structure of the radio base station according to the present embodiment. A radio base station 10 is provided with a plurality of transmitting/receiving antennas 101, amplifying sections 102, transmitting/receiving sections 103, a baseband signal processing section 104, a call processing section 105, and a communication path interface 106. Note that the radio base station 10 may be configured to include one or more transmitting/receiving antennas 101, one or more amplifying sections 102, and one or more transmitting/receiving sections 103.
User data to be transmitted from the radio base station 10 to a user terminal 20 on the downlink is input from the higher station apparatus 30 to the baseband signal processing section 104, via the communication path interface 106.
In the baseband signal processing section 104, the user data is subjected to at least one of transmission processes, such as a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, rate matching, scrambling, an inverse fast Fourier transform (IFFT) process, and a precoding process, and the result is forwarded to each transmitting/receiving section 103. Downlink control signals are also subjected to transmission processes such as channel coding and/or inverse fast Fourier transform, and the result is forwarded to each transmitting/receiving section 103.
The transmitting/receiving sections 103 convert baseband signals that are pre-coded and output from the baseband signal processing section 104 on a per antenna basis, to have radio frequency bands and transmit the result. The radio frequency signals having been subjected to frequency conversion in the transmitting/receiving sections 103 are amplified in the amplifying sections 102, and transmitted from the transmitting/receiving antennas 101.
The transmitting/receiving sections 103 can be constituted with transmitters/receivers, transmitting/receiving circuits, or pieces of transmitting/receiving apparatus that can be described based on general understanding of the technical field to which the present invention pertains. Note that each transmitting/receiving section 103 may be structured as a transmitting/receiving section in one entity, or may be constituted with a transmitting section and a receiving section.
On the other hand, as for uplink signals, radio frequency signals received in the transmitting/receiving antennas 101 are amplified in the amplifying sections 102. The transmitting/receiving sections 103 receive the uplink signals amplified in the amplifying sections 102. The transmitting/receiving sections 103 converts the received signals into the baseband signal through frequency conversion and outputs to the baseband signal processing section 104.
In the baseband signal processing section 104, the uplink data included in the input uplink signals is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs at least one of call processing, such as setting up and releasing communication channels, management of the state of the radio base station 10, and management of the radio resources.
The communication path interface 106 transmits and/or receives signals to and/or from the higher station apparatus 30 via a certain interface. The communication path interface 106 may transmit and/or receive signals (backhaul signaling) with neighboring radio base stations 10 via an inter-base station interface (for example, an optical fiber in compliance with the CPRI (Common Public Radio Interface) and an X2 interface).
The transmitting/receiving sections 103 receive the uplink data (TB or one or more CBs) and uplink control information (UCI) multiplexed on the uplink shared channel. The transmitting/receiving sections 103 may transmit information related to the RBGs (first aspect) and/or information related to the subbands (second aspect).

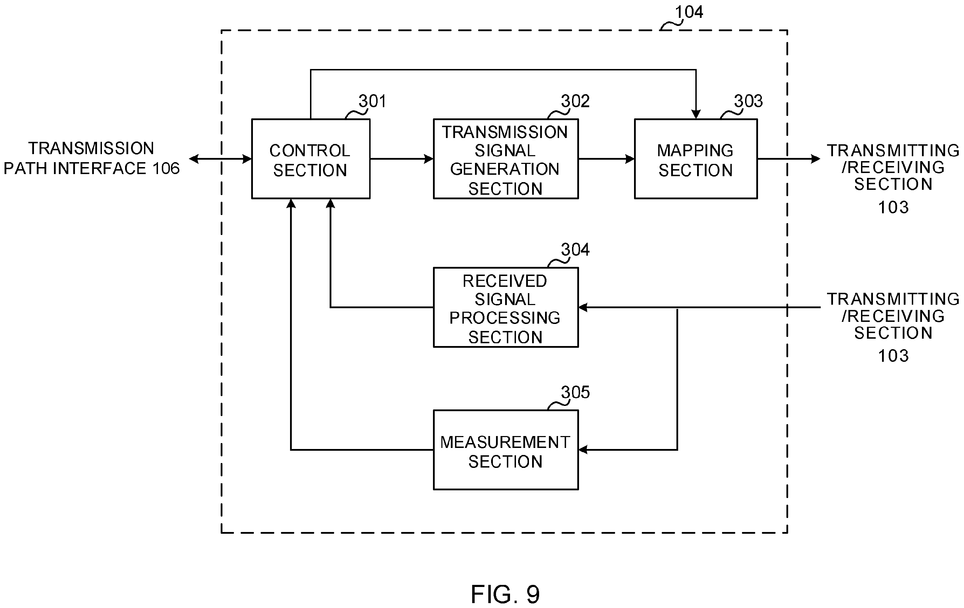

FIG. 9 is a diagram to show an example of a functional structure of a radio base station according to the present embodiment. Note that, although FIG. 9 primarily shows functional blocks that pertain to characteristic parts of the present embodiment, the radio base station 10 includes other functional blocks that are necessary for radio communication as well. As shown in FIG. 9, the baseband signal processing section 104 is provided with a control section 301, a transmission signal generation section 302, a mapping section 303, a received signal processing section 304, and a measurement section 305.
The control section 301 controls the whole of the radio base station 10. The control section 301 controls, for example, at least one of the generation of downlink signals by the transmission signal generation section 302, the mapping of downlink signals by the mapping section 303, the receiving processes (for example, demodulation) for uplink signals by the received signal processing section 304, and the measurements by the measurement section 305.
To be more specific, the control section 301 performs scheduling for the user terminals 20. For example, the control section 301 controls resource allocation for the uplink shared channel (for example, allocation of one or more RBs or one or more RBGs). The control section 301 may control generation and/or transmission of information related to the RBGs allocated to the uplink shared channel.

The control section 301 controls precoding of the uplink shared channel. Specifically, the control section 301 may control generation and/or transmission of information related to the subbands (control bands) used as control units for precoding of the uplink shared channel.

The control section 301 controls reception of the uplink shared channel on which the uplink data and the uplink control information are multiplexed. Specifically, the control section 301 may control the receiving process (for example, demodulation and/or decoding) for the uplink data in consideration of the puncturing and/or rate matching of the uplink data (TB or one or more CBs) for the resource elements to which the UCI is mapped.

The control section 301 can be constituted with a controller, a control circuit, or control apparatus that can be described based on general understanding of the technical field to which the present invention pertains.

The transmission signal generation section 302 generates downlink signals (including downlink data signals, downlink control signals, and downlink reference signals), based on commands from the control section 301 and outputs the downlink signals to the mapping section 303.

The transmission signal generation section 302 may be a signal generator, a signal generation circuit, or signal generation apparatus that can be described based on general understanding of the technical field to which the present invention pertains.

The mapping section 303 maps the downlink signals generated in the transmission signal generation section 302 to certain radio resources, based on commands from the control section 301, and outputs the downlink signals to the transmitting/receiving sections 103. The mapping section 303 may be a mapper, a mapping circuit, or mapping apparatus that can be described based on general understanding of the technical field to which the present invention pertains.

The received signal processing section 304 performs the receiving process (for example, demapping, demodulation, decoding, and so on) for UL signals (including, for example, uplink data signals, uplink control signals, and uplink reference signals) that are transmitted from the user terminals 20. Specifically, the received signal processing section 304 may output the received signals and/or the signals resulting from the receiving process, to the measurement section 305. Furthermore, the received signal processing section 304 performs the receiving process of UCI, based on the uplink control channel structures according to commands from the control section 301.

The measurement section 305 conducts measurements with respect to the received signals. The measurement section 305 can be constituted with a measurer, a measurement circuit, or measurement apparatus that can be described based on general understanding of the technical field to which the present invention pertains.

The measurement section 305 may measure the channel quality in UL, based on, for example, the received power (for example, RSRP (Reference Signal Received Power)) and/or the received quality (for example, RSRQ (Reference Signal Received Quality)) of uplink reference signals. The measurement results may be output to the control section 301.

<User Terminal>

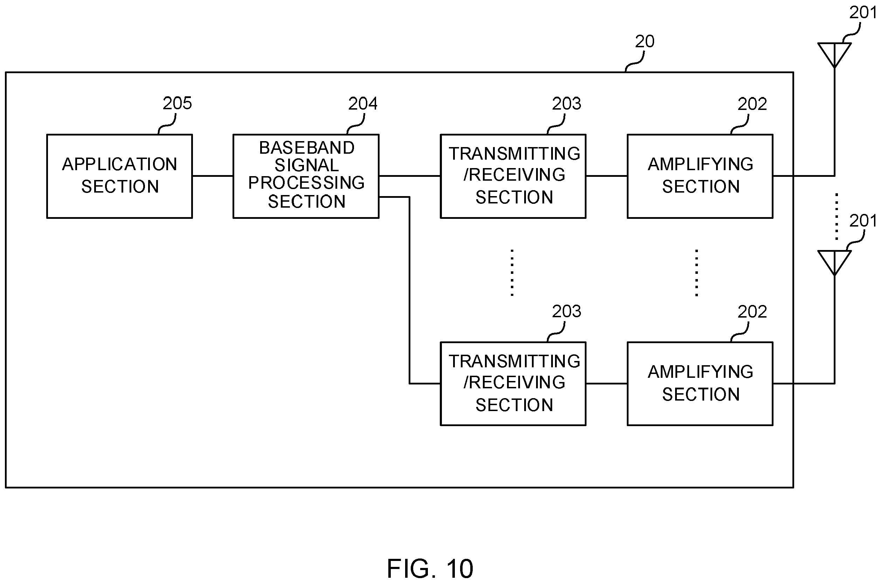

FIG. 10 is a diagram to show an example of an overall structure of a user terminal according to the present embodiment. Each user terminal 20 is provided with a plurality of transmitting/receiving antennas 201 for MIMO communication, amplifying sections 202, transmitting/receiving sections 203, a baseband signal processing section 204, and an application section 205.

Radio frequency signals that are received in the plurality of transmitting/receiving antennas 201 are amplified in the amplifying sections 202. The transmitting/receiving sections 203 receive downlink signals amplified in the amplifying sections 202. The transmitting/receiving sections 203 convert the received signals into baseband signals through frequency conversion, and output the baseband signals to the baseband signal processing section 204.

The baseband signal processing section 204 performs, on each input baseband signal, at least one of an FFT process, error correction decoding, a retransmission control receiving process, and so on. The downlink data is forwarded to the application section 205. The application section 205 performs processes related to higher layers above the physical layer and the MAC layer, and so on.

Meanwhile, the uplink data is input from the application section 205 to the baseband signal processing section 204. The baseband signal processing section 204 performs at least one of a retransmission control transmission process (for example, an HARQ transmission process), channel coding, rate matching, puncturing, a discrete Fourier transform (DFT) process, an IFFT process, and so on, and the result is forwarded to each transmitting/receiving section 203. At least one of channel coding, rate matching, puncturing, a DFT process, and an IFFT process is also performed on the UCI (for example, at least one of A/N for the downlink signal, channel state information (CSI), and a scheduling request (SR)), and the result is transferred to each transmitting/receiving section 203.

The transmitting/receiving sections 203 convert the baseband signals output from the baseband signal processing section 204 to have radio frequency band and transmit the result. The radio frequency signals having been subjected to frequency conversion in the transmitting/receiving sections 203 are amplified in the amplifying sections 202, and transmitted from the transmitting/receiving antennas 201.

The transmitting/receiving sections 203 use the uplink shared channel to transmit the uplink data (TB or one or more CBs) and the uplink control information (UCI). The transmitting/receiving sections 203 may receive the information related to the RBGs (first aspect) and/or the information related to the subbands (second aspect).

The transmitting/receiving sections 203 may be transmitters/receivers, transmitting/receiving circuits, or pieces of transmitting/receiving apparatus that can be described based on general understanding of the technical field to which the present invention pertains. Each transmitting/receiving section 203 may be structured as a transmitting/receiving section in one entity, or may be constituted with a transmitting section and a receiving section.

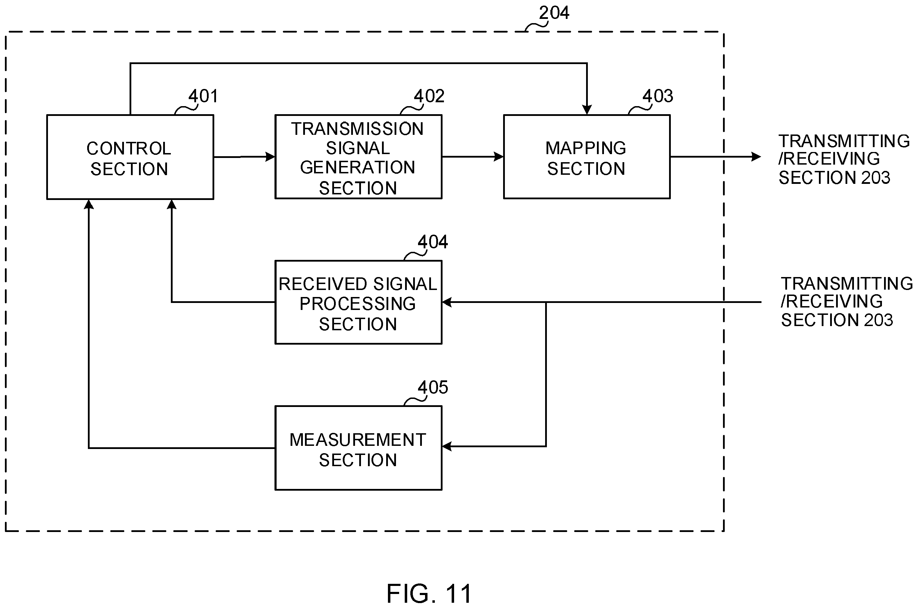

FIG. 11 is a diagram to show an example of a functional structure of the user terminal according to the present embodiment. Note that, although FIG. 11 primarily shows functional blocks that pertain to characteristic parts of the present embodiment, the user terminal 20 includes other functional blocks that are necessary for radio communication as well. As shown in FIG. 11, the baseband signal processing section 204 included in the user terminal 20 is provided with a control section 401, a transmission signal generation section 402, a mapping section 403, a received signal processing section 404, and a measurement section 405.

The control section 401 controls the whole of the user terminal 20. The control section 401 controls, for example, at least one of the generation of uplink signals in the transmission signal generation section 402, the mapping of uplink signals in the mapping section 403, the downlink signal receiving processes in the received signal processing section 404, the measurements in the measurement section 405, and so on.

The control section 401 controls transmission (for example, mapping) of the uplink data (for example, CBs) and uplink control information (UCI) using the uplink shared channel (PUSCH).

Specifically, the control section 401 may control the mapping of the UCI, based on the information related to the RBG RBGs allocated to the uplink shared channel (first aspect) and/or the information related to the subbands (control bands) used as control units for precoding of the uplink shared channel (second aspect).

Specifically, the control section 401 may control the resource elements to which the UCI is mapped, in each of the RBGs allocated to the uplink shared channel, based on information related to the RBGs (first aspect, FIG. 5).

The information related to the RBGs may indicate at least one of the number of RBGs allocated to the uplink shared channel, the index indicating the start position of each of the RBGs allocated to the uplink shared channel, and the number of resource blocks included in each RBG.

Specifically, the control section 401 may control the resource elements to which the UCI is mapped, in each of the control bands allocated to the uplink shared channel, based on information related to the subbands (control bands) (second aspect, FIG. 6).

The information related to the subbands (control band) may indicate at least one of the number of subbands allocated to the uplink shared channel (number of control bands), the index indicating the start position of each of the control bands allocated to the uplink shared channel, and the number of resource blocks included in each control band.

The control section 401 may control the puncturing and/or rate matching of the uplink data (TB or one or more CBs) for the resource elements to which the UCI is mapped.

The control section 401 can be constituted with a controller, a control circuit, or control apparatus that can be described based on general understanding of the technical field to which the present invention pertains.

The transmission signal generation section 402 generates (for example, through coding, rate matching, puncturing, modulation, and so on) uplink signals (including uplink data signals, uplink control signals, uplink reference signals, and UCI), based on commands from the control section 401 and outputs these signals to the mapping section 403. The transmission signal generation section 402 may be a signal generator, a signal generation circuit, or signal generation apparatus that can be described based on general understanding of the technical field to which the present invention pertains.

The mapping section 403 maps the uplink signals (uplink data, uplink control information, and the like) generated in the transmission signal generation section 402 to radio resources, based on commands from the control section 401, and outputs the uplink signals to the transmitting/receiving sections 203. The mapping section 403 may be a mapper, a mapping circuit, or mapping apparatus that can be described based on general understanding of the technical field to which the present invention pertains.

The received signal processing section 404 performs the receiving process (for example, demapping, demodulation, decoding, and so on) on downlink signals (downlink data signals, scheduling information, downlink control signals, and downlink reference signals). The received signal processing section 404 outputs information received from the radio base station 10, to the control section 401. The received signal processing section 404 outputs, for example, broadcast information, system information, higher layer control information through the higher layer signaling such as RRC signaling, physical layer control information (L1/L2 control information), and so on, to the control section 401.

The received signal processing section 404 can be constituted with a signal processor, a signal processing circuit, or signal processing apparatus that can be described based on general understanding of the technical field to which the present invention pertains. Also, the received signal processing section 404 can constitute a receiving section according to the present invention.

The measurement section 405 measures channel states, based on reference signals (for example, CSI-RSs) from the radio base station 10, and outputs the measurement results to the control section 401. Note that the channel state measurements may be conducted per CC.

The measurement section 405 can be constituted with a signal processor, a signal processing circuit, or signal processing apparatus, and a measurer, a measurement circuit, or measurement apparatus that can be described based on general understanding of the technical field to which the present invention pertains.


<Hardware Structure>

Note that the block diagrams that have been used to describe the above embodiments show blocks in functional units. These functional blocks (components) may be implemented in arbitrary combinations of hardware and/or software. Also, the method for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire and/or wireless, for example) and using these plurality of pieces of apparatus.

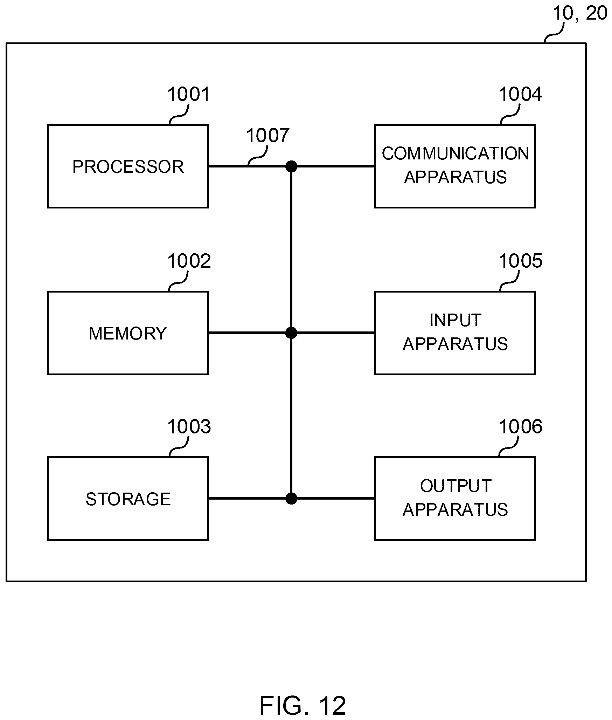

For example, a radio base station, a user terminal, and so on according to the present embodiment may function as a computer that executes the processes of the radio communication method of the present invention. FIG. 12 is a diagram to show an example of a hardware structure of a radio base station and a user terminal according to the present embodiment. Physically, the above-described radio base station 10 and user terminals 20 may each be formed as computer apparatus that includes a processor 1001, a memory 1002, a storage 1003, a communication apparatus 1004, an input apparatus 1005, an output apparatus 1006, a bus 1007, and so on.

Note that, in the following description, the term "apparatus" may be interpreted as "circuit," "device," "unit," and so on. The hardware structure of the radio base station 10 and the user terminals 20 may be designed to include one or more of apparatuses shown in the drawings, or may be designed not to include part of apparatuses.

For example, although only one processor 1001 is shown, a plurality of processors may be provided. Furthermore, processes may be implemented with one processor or may be implemented at the same time, in sequence, or in different manners with one or more processors. Note that the processor 1001 may be implemented with one or more chips.

Each function of the radio base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and read and/or write data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described baseband signal processing section 104 (204), call processing section 105, and so on may be implemented by the processor 1001.

Furthermore, the processor 1001 reads programs (program codes), software modules, data, and so on from the storage 1003 and/or the communication apparatus 1004, into the memory 1002, and executes various processes according to these. As for the programs, programs to allow computers to execute at least part of the operations of the above-described embodiments are used. For example, the control section 401 of each user terminal 20 may be implemented by control programs that are stored in the memory 1002 and that operate on the processor 1001, and other functional blocks may be implemented likewise.

The memory 1002 is a computer-readable recording medium, and may be constituted with, for example, at least one of a ROM (read only memory), an EPROM (erasable programmable ROM), an EEPROM (electrically EPROM), a RAM (random access memory), and other appropriate storage media. The memory 1002 may be referred to as a "register," a "cache," a "main memory (primary storage apparatus)," and so on. The memory 1002 can store executable programs (program codes), software modules, and/or the like for implementing a radio communication method according to the present embodiment.

The storage 1003 is a computer-readable recording medium, and may be constituted with, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via wired and/or wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, frequency division duplex (FDD) and/or time division duplex (TDD). For example, the above-described transmitting/receiving antennas 101 (201), amplifying sections 102 (202), transmitting/receiving sections 103 (203), communication path interface 106, and so on may be implemented by the communication apparatus 1004.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, an LED (Light Emitting Diode) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the radio base station 10 and the user terminals 20 may be structured to include hardware such as a microprocessor, a digital signal processor (DSP), an ASIC (Application-Specific Integrated Circuit), a PLD (Programmable Logic Device), an FPGA (Field Programmable Gate Array), and so on, and part or all of the functional blocks may be implemented by the hardware. For example, the processor 1001 may be implemented with at least one of these pieces of hardware.

(Variations)

Note that the terminology used in this specification and/or the terminology that is needed to understand this specification may be replaced by other terms that convey the same or similar meanings. For example, "channels" and/or "symbols" may be replaced by "signals" ("signaling"). Also, "signals" may be "messages." A reference signal may be abbreviated as an "RS," and may be referred to as a "pilot," a "pilot signal", and so on, depending on which standard applies. Furthermore, a "component carrier (CC)" may be referred to as a "cell," a "frequency carrier," a "carrier frequency," and so on.

Furthermore, a radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may have a fixed time duration (for example, 1 ms) independent of numerology.

Furthermore, a slot may be constituted of one or a plurality of symbols in the time domain (OFDM (Orthogonal Frequency Division Multiplexing) symbols, SC-FDMA (Single Carrier Frequency Division Multiple Access) symbols, and so on). Furthermore, a slot may be a time unit based on numerology. A slot may include a plurality of mini-slots. Each mini-slot may be constituted of one or a plurality of symbols in the time domain. A mini-slot may be referred to as a "sub-slot."

A radio frame, a subframe, a slot, a mini-slot, and a symbol all express time units in signal communication. A radio frame, a subframe, a slot, a mini-slot, and a symbol may each be called by other applicable terms. For example, one subframe may be referred to as a "transmission time interval (TTI)," a plurality of consecutive subframes may be referred to as a "TTI," or one slot or one mini-slot may be referred to as a "TTI." That is, a subframe and/or a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a radio base station schedules the allocation of radio resources (such as a frequency bandwidth and transmission power that are available for each user terminal) for the user terminal in TTI units. Note that the definition of TTIs is not limited to this.

TTIs may be transmission time units for channel-encoded data packets (transport blocks), code blocks, and/or codewords, or may be the unit of processing in scheduling, link adaptation, and so on. Note that, when TTIs are given, the time interval (for example, the number of symbols) to which transport blocks, code blocks and/or codewords are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," and so on. A TTI that is shorter than a normal TTI may be referred to as a "shortened TTI," a "short TTI," a "partial or fractional TTI," a "shortened subframe," a "short subframe," a "mini-slot," a "sub-slot," and so on.

Note that a long TTI (for example, a normal TTI, a subframe, and so on) may be interpreted as a TTI having a time duration exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. Also, an RB may include one or a plurality of symbols in the time domain, and may be one slot, one mini-slot, one subframe, or one TTI in length. One TTI and one subframe each may be constituted of one or a plurality of resource blocks. Note that one or a plurality of RBs may be referred to as a "physical resource block (PRB (Physical RB))," a "sub-carrier group (SCG)," a "resource element group (REG),"a "PRB pair," an "RB pair," and so on.

Furthermore, a resource block may be constituted of one or a plurality of resource elements (REs). For example, one RE may correspond to a radio resource field of one subcarrier and one symbol.

Note that the structures of radio frames, subframes, slots, mini-slots, symbols, and so on described above are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

The information, parameters, and so on described in this specification may be represented in absolute values or in relative values with respect to certain values, or may be represented in another corresponding information. For example, radio resources may be specified by certain indices.

The names used for parameters and so on in this specification are in no respect limiting. For example, since various channels (PUCCH (Physical Uplink Control Channel), PDCCH (Physical Downlink Control Channel), and so on) and information elements can be identified by any suitable names, the various names assigned to these individual channels and information elements are in no respect limiting.

The information, signals, and/or others described in this specification may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output from higher layers to lower layers and/or from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in this specification, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (master information block (MIB), system information blocks (SIBs), and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)," and so on. RRC signaling may be referred to as an "RRC message," and can be, for example, an RRC connection setup (RRCConnectionSetup) message, an RRC connection reconfiguration (RRCConnectionReconfiguration) message, and so on. MAC signaling may be reported using, for example, MAC control elements (MAC CEs) .

Reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other names, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, instructions, information, and so on may be transmitted and received via communication media. For example, when software is transmitted from a website, a server, or other remote sources by using wired technologies (coaxial cables, optical fiber cables, twisted-pair cables, digital subscriber lines (DSLs), and so on) and/or wireless technologies (infrared radiation, microwaves, and so on), these wired technologies and/or wireless technologies are also included in the definition of communication media.

The terms "system" and "network" as used herein are used interchangeably.

In the present specification, the terms "base station (BS)," "radio base station," "eNB," "gNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell," and so on.

A base station can accommodate one or a plurality of (for example, three) cells (also referred to as "sectors"). In a case where a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part of or the entire coverage area of a base station and/or a base station subsystem that provides communication services within this coverage.

In the present specification, the terms "mobile station (MS)," "user terminal," "user equipment (UE)," and "terminal" may be used interchangeably. A base station may be referred to as a term "fixed station," "NodeB," "eNodeB (eNB)," "access point," "transmission point," "receiving point," "femto cell," "small cell," and so on.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases for a person skilled in the art.

Furthermore, the radio base stations in this specification may be interpreted as user terminals. For example, each aspect/embodiment of the present invention may be applied to a configuration in which communication between a radio base station and a user terminal is replaced with communication among a plurality of user terminals (D2D (Device-to-Device)). In this case, the user terminals 20 may have the functions of the radio base stations 10 described above. In addition, wording such as "uplink" and "downlink" may be interpreted as "side." For example, an uplink channel may be interpreted as a side channel.

Likewise, the user terminals in this specification may be interpreted as radio base stations. In this case, the radio base stations 10 may have the functions of the user terminals 20 described above.

Actions which have been described in this specification to be performed by base stations may, in some cases, be performed by upper nodes. In a network including one or a plurality of network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects/embodiments illustrated in this specification may be used individually or in combinations, which may be switched depending on the mode of implementation. The order of processes, sequences, flowcharts, and so on that have been used to describe the aspects/embodiments herein may be re-ordered as long as inconsistencies do not arise. For example, although various methods have been illustrated in this specification with various components of steps in exemplary orders, the specific orders that are illustrated herein are by no means limiting.

The aspects/embodiments illustrated in this specification may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods and/or next-generation systems that are enhanced based on these.

The phrase "based on" (or "on the basis of") as used in this specification does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used herein does not generally limit the quantity or order of these elements. These designations may be used herein only for convenience, as a method for distinguishing between two or more elements. Thus, reference to the first and second elements does not imply that only two elements may be employed, or that the first element must precede the second element in some way.

The term "judging (determining)" as used herein may encompass a wide variety of actions. For example, "judging (determining)" may be interpreted to mean making "judgments (determinations)" about calculating, computing, processing, deriving, investigating, looking up (for example, searching a table, a database, or some other data structures), ascertaining, and so on. Furthermore, "judging (determining)" may be interpreted to mean making "judgments (determinations)" about receiving (for example, receiving information), transmitting (for example, transmitting information), input, output, accessing (for example, accessing data in a memory), and so on. In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

The terms "connected" and "coupled," or any variation of these terms as used herein mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In this specification, when two elements are connected, the two elements may be considered "connected" or "coupled" to each other by using one or more electrical wires, cables and/or printed electrical connections, and, as some non-limiting and non-inclusive examples, by using electromagnetic energy having wavelengths in radio frequency regions, microwave regions, (both visible and invisible) optical regions, or the like.

In this specification, the phrase "A and B are different" may mean that "A and B are different from each other." The terms "separate," "be coupled," and so on may be interpreted similarly.

When terms such as "including," "comprising," and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described herein. The present invention can be implemented with various corrections and in various modifications, without departing from the spirit and scope of the present invention defined by the recitations of claims. Consequently, the description herein is provided only for the purpose of explaining examples, and should by no means be construed to limit the present invention in any way.

## Claims

1.  A user terminal comprising:

    a transmitting section that transmits uplink data and uplink control information by using an uplink shared channel; and
    a control section that controls mapping of the uplink control information, based on information related to resource block groups (RBGs) allocated to the uplink shared channel and/or information related to control bands used as control units for precoding of the uplink shared channel.

2.  The user terminal according to claim 1, wherein
    the control section controls the resource elements to which the uplink control information is mapped, in each of the RBGs allocated to the uplink shared channel, based on information related to the RBGs.

3.  The user terminal according to claim 1 or 2, wherein
    the information related to the RBGs indicates at least one of a total number of the RBGs allocated to the uplink shared channel, an index indicating a start position of each of the RBGs allocated to the uplink shared channel, and a number of resource blocks included in each RBG.

4.  The user terminal according to any one of claims 1 to 3, wherein
    the control section controls the resource elements to which the uplink control information is mapped, in each of the control bands allocated to the uplink shared channel, based on information related to the control bands.

5.  The user terminal according to any one of claims 1 or 4, wherein
    the information related to the control bands indicates at least one of a total number of the control bands allocated to the uplink shared channel, an index indicating a start position of each of the control bands allocated to the uplink shared channel, and a number of resource blocks included in each control band.

6.  A radio communication method comprising:

    in a user terminal,
    transmitting uplink data and uplink control information by using an uplink shared channel; and
    controlling mapping of the uplink control information, based on information related to resource block groups (RBG) allocated to the uplink shared channel and/or information related to control bands for precoding of the

uplink shared channel.

FIG. 1A

FIG. 1B

SUBFRAME

SLOT

FREQUENCY

TIME

DMRS    UCI

EP 3 713 320 A1

# FIG. 2

RATE MATCHING PROCESSING

PUNCTURE PROCESSING

EP 3 713 320 A1

FIG. 3A

FIG. 3B

DMRS  UCI

UPLINK DATA

EP 3 713 320 A1

# FIG. 4A

BWP

| #RB | 0 | 1 | 2 | 3 | 4 | 5 | 6 | 7 | 8 | 9 | 10 | 11 | 12 | 13 | 14 | 15 | 16 | 17 | 18 | 19 | ··· | 60 | 61 | 62 | 63 |

RBG#0    RBG#1    RBG#2    RBG#3    RBG#4    ···    RBG#14

| BITMAP | 1 | 0 | 0 | 1 | 0 | ··· | 1 |

# FIG. 4B

BWP

SUBBAND #0    SUBBAND #1    SUBBAND #2

| #RB | 0 | 1 | 2 | 3 | 4 | 5 | 6 | 7 | 8 | 9 | 10 | 11 | 12 | 13 | 14 | 15 | 16 | 17 | 18 | 19 | 20 | ··· | 60 | 61 | 62 | 63 |

$RB_{START}$

$L_{CRBs}$ = TRANSMISSION BANDWIDTH

EP 3 713 320 A1

FIG. 5

FREQUENCY

RBG#2

RB#k+1

RB#k

f₂

SYMBOL

RE

SUBCARRIER

RBG#1

RB#1

RB#0

f₁

# 0  # 1  ...

TIME

DMRS      UCI      UPLINK DATA

FIG. 6

FIG. 7

TO HIGHER STATION
APPARATUS 30 OR TO
OTHER RADIO BASE
STATIONS 10

106
TRANSMISSION
PATH INTERFACE

104
BASEBAND
SIGNAL
PROCESSING
SECTION

103
TRANSMITTING
/RECEIVING
SECTION

102
AMPLIFYING
SECTION

105
CALL
PROCESSING
SECTION

103
TRANSMITTING
/RECEIVING
SECTION

102
AMPLIFYING
SECTION

10

101

101

FIG. 8

FIG. 9

104

301 CONTROL SECTION

302 TRANSMISSION SIGNAL GENERATION SECTION

303 MAPPING SECTION

304 RECEIVED SIGNAL PROCESSING SECTION

305 MEASUREMENT SECTION

TRANSMISSION PATH INTERFACE 106

TRANSMITTING /RECEIVING SECTION 103

TRANSMITTING /RECEIVING SECTION 103

FIG. 10

FIG. 11

EP 3 713 320 A1

10, 20

| 1001 | 1007 | 1004 |
|---|---|---|
| PROCESSOR | | COMMUNICATION APPARATUS |

| 1002 | | 1005 |
|---|---|---|
| MEMORY | | INPUT APPARATUS |

| 1003 | | 1006 |
|---|---|---|
| STORAGE | | OUTPUT APPARATUS |

FIG. 12

## INTERNATIONAL SEARCH REPORT

International application No.

PCT/JP2017/041571

### A. CLASSIFICATION OF SUBJECT MATTER
Int. Cl. H04W72/04(2009.01)i, H04W72/12(2009.01)i

According to International Patent Classification (IPC) or to both national classification and IPC

### B. FIELDS SEARCHED

Minimum documentation searched (classification system followed by classification symbols)
Int. Cl. H04B7/24-7/26, H04W4/00-99/00

Documentation searched other than minimum documentation to the extent that such documents are included in the fields searched
Published examined utility model applications of Japan     1922-1996
Published unexamined utility model applications of Japan   1971-2018
Registered utility model specifications of Japan           1996-2018
Published registered utility model applications of Japan   1994-2018

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | InterDigital Inc., On UCI resource mapping on PUSCH, 3GPP TSG RAN WG1 Meeting 90bis R1-1718492, internet <URL:http://www.3gpp.org/ftp/TSG_RAN/WG1_RL1/TSGR1_90b/Docs/R1-1718492.zip>, 03 October 2017, pages 1-3 | 1-3, 6 |
| X | LG Electronics, Considerations on UCI and UL channel multiplexing for NR, 3GPP TSG RAN WG1 Meeting 90bis R1-1717962, internet <URL:http://www.3gpp.org/ftp/TSG_RAN/WG1_RL1/TSGR1_90b/Docs/R1-1717962.zip>, 03 October 2017, pages 1-14 | 1, 4-6 |

☒ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 24.01.2018 | 06.02.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

| International application No. |
| --- |
| PCT/JP2017/041571 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | WO 2017/019132 A1 (INTEL IP CORPORATION) 02 February 2017, entire text (Family: none) | 1-6 |
| T | NTT DOCOMO, INC., UCI multiplexing, 3GPP TSG RAN WG1 Meeting 91 R1-1720819, internet <URL:http://www.3gpp.org/ftp/TSG_RAN/WG1_RL1/TSGR1_91/Docs/R1-1720819.zip>, 11 November 2017, pages 1-5 | 1-6 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010